# EUROPEAN PATENT SPECIFICATION

(11) **EP 3 590 833 B1**
(45) Date of publication and mention of the grant of the patent: **21.04.2021**
(21) Application number: 18400022.2
(22) Date of filing: 05.07.2018
(51) Int. Cl.: B64C 27/605, B32B 27/12

(54) **COMPOSITE MATERIALS IN CONTROL ELEMENTS FOR CONTROLLING THE PITCH OF ROTOR BLADES**
VERBUNDWERKSTOFFE IN STEUERELEMENTEN ZUR STEUERUNG DER ROTORBLATTVERSTELLUNG
MATÉRIAUX COMPOSITES DANS DES ÉLÉMENTS DE COMMANDE POUR COMMANDER LE PAS DE PALES DE ROTOR

(43) Date of publication of application: 08.01.2020
(73) Proprietor: AIRBUS HELICOPTERS DEUTSCHLAND GmbH, 86609 Donauwörth (DE)
(72) Inventor: Kuntze-Fechner, Gerald, 83703 Gmund am Tegernsee (DE); Bauer, Markus, 81549 München (DE)
(74) Representative: GPI & Associés

(56) References cited:
- EP-A1- 3 281 869
- EP-A2- 0 301 994
- US-A- 3 553 978
- US-B2- 7 597 953
- US-B2- 8 083 180

## Description

The invention is related to a control system, and, more particularly, to the actuator levers of control systems in a rotary-wing aircraft.

A rotary-wing aircraft includes many different control systems that receive a control input and transmit a control output in response to receiving the control input. An example for such a control system is a control system for controlling the pitch of rotor blades of a multi-blade rotor in a rotary-wing aircraft.

Conventionally, a control system for controlling the pitch of rotor blades is used in operation for rotating the rotor blades around associated blade pitch axes by means of suitable pitch levers associated with the rotor blades that are operated by corresponding pitch control rods. Each pitch control rod is, therefore, connected to a rotating plate that rotates in operation with and around a rotor axis of the rotor. This rotating plate is usually mounted to rotate on a non-rotating plate, which is restrained against any rotation around the rotor axis of the rotor by a connection that connects the non-rotating plate to a non-rotatable underlying structure of the rotary-wing aircraft, such as its fuselage or main gear box.

The rotating plate and the non-rotating plate define a so-called swash plate assembly and are usually annular and surround the rotor axis. This swash plate assembly is activatable by means of a suitable control input unit via associated control actuators for respectively controlling the pitch of the rotor blades. More specifically, the swash plate assembly is adapted to transfer control inputs from a non-rotating system that includes the suitable control input unit and the non-rotating plate to a rotating system that includes the rotating plate and, when being mounted to the rotary-wing aircraft, also the rotor blades of the multi-blade rotor, i.e. the rotatable rotor as such.

The rotating and non-rotating plates are usually displaceable axially parallel to the rotor axis for controlling collective pitch, and in general they can be tilted in any direction around the rotor axis for controlling cyclic pitch, e.g. by means of an axially displaceable central spherical bearing or gimbals with e.g. cardan-joint or u-joint rings. The latter, on which the non-rotating plate is mounted in an oscillating manner, is generally centered on the rotor axis.

In such control systems, corresponding control inputs to the swash plate assembly can be mixed by a control input unit that is embodied e.g. as a so-called mixing lever gear unit and arranged underneath the swash plate assembly.

For collective pitch control, i.e. a change of the pitch angle of the rotor blades independent of the angular position around the rotor axis, the sliding sleeve can be displaced axially parallel to a rotor axis of the associated rotor by a mixing lever gear unit fork of the mixing lever gear unit. For cyclic pitch control, i.e. a change of the pitch angle of the rotor blades based on the angular position of the rotor blades around the rotor axis, the mixing lever gear unit may tilt the swash plate.

The document EP 0 452 248 A2 describes a composite scissor for a swash plate. The composite scissor assembly utilizes one or more flexible composite straps disposed either in a radial or non-radial relationship between a hub attached to a rotor shaft and an inner or outer ring of a helicopter swashplate. The composite material has sufficient edge-wise stiffness to allow effective torque transmission between the rotor shaft and the swashplate yet has sufficient flexibility to allow for a vertical and angular displacement of the swashplate relative to the rotor shaft. Utilizing a flexible composite scissor assembly eliminates the need for mechanical linkages having pins and bearings which are a frequent source for wear, increasing the reliability of the rotor assembly, while reducing weight.

The document EP 2 979 978 A1 describes a control system with a central spherical bearing on which a non-rotating plate of a swash plate assembly is mounted. The spherical bearing is mounted to a non-rotating sliding sleeve, wherein a rotor shaft of an associated rotor is rotatably received. This non-rotating sliding sleeve can be displaced axially parallel to a rotor axis of the rotor for controlling collective pitch, while rotating and non-rotating plates of this control system can be tilted in any direction around the rotor axis for controlling cyclic pitch. For controlling axial displacement of the non-rotating sliding sleeve in operation, a fork unit with an associated straight control lever is provided. The associated straight control lever is pivotally mounted to a mounting part of the non-rotating sliding sleeve, which is formed at - or by - a lower section of the non-rotating sliding sleeve. The straight control lever is further hinged on a hinge support such that a rotational movement of the straight control lever on the hinge support upon activation is translatable into a pivotal movement of the straight control lever on the non-rotating sliding sleeve at the mounting part that is adapted to cause an axial displacement on the rotor shaft of the non-rotating sliding sleeve.

It should be noted that the control elements of such control systems, including the hinge carrier and the bearing block as well as the mixing lever gear unit including, for example, a fork-shaped control lever and an associated straight control lever need to absorb comparatively high loads coming from an associated multi-blade main rotor of an associated rotary-wing aircraft. These loads include high pressure and tension combined with shear forces. with milled cut-outs between the load introduction to receive stiff parts with outside walls or webs.

As a result, the control elements of the control system including the hinge carrier, the bearing block, the non-rotating sliding sleeve, the fork-shaped control lever, and the associated straight control lever are comparatively heavy and the control system comprises a comparatively great number of individual components. Furthermore, the control system is comparatively clumsy, in particular due to the use of the spherical bearings or liner bushes between the hinge carrier and the bearing block and requires comparatively extensive maintenance efforts. Moreover, as most of the control elements are usually made up of metal, they are prone to corrosion.

Other control systems are exemplarily described in the documents US 2,829,721, US 2,534,353, US 2,537,623, US 2,599,690, US 2,444,070, US 3,006,418, and EP 3 281 869 A1. These documents respectively describe control systems for controlling the pitch of rotor blades of a multi-blade rotor in a rotary-wing aircraft, which are at least similar to the above described control system.

The document EP 3 281 869 A1 describes a control system for controlling at least collective pitch of rotor blades of a multi-blade rotor with a rotor shaft in a rotary-wing aircraft. The control system comprises a non-rotating sliding sleeve that is mountable to the rotor shaft such that the non-rotating sliding sleeve is axially displaceable coaxially to an associated rotor axis on the rotor shaft. At least one actuator arm is pivotally mounted to the non-rotating sliding sleeve and adapted for axially displacing the non-rotating sliding sleeve that is mounted to the rotor shaft upon activation. At least one hinge support is adapted for a hinged support of the at least one actuator arm.

By way of example, the use of a composite component is described in the documents US 7,597,953 B2, US 8,083,180 B2, US 3,553,978 A, and EP 0 301 994 A2.

Thus, in summary, control systems of rotary-wing aircrafts such as the control system for controlling the pitch of rotor blades of a rotary-wing aircraft include critical, high fatigue loaded parts such as actuator levers, which may be embodied by fork-shaped control levers, straight control levers, or bell crank control levers, just to name a few. These parts are connected by control links by means of journal bearings and bolts. The actuator levers usually have a bearing base around which they rotate. Moreover, in some control systems, the fork-shaped control lever includes a single supported pivot bearing for a straight control lever, which is loaded in bending at the fork-shaped control lever.

It is, therefore, an objective to provide a new control system for a rotary-wing aircraft. The new control system includes a new actuator lever, which is light weight, reliable, stiff, easy to manufacture, has a superior fatigue resistance, and is suitable to replace the actuator levers of conventional control systems.

This objective is solved by a new control system in a rotary-wing aircraft, which comprises the features of claim 1. More specifically, a control system in a rotary-wing aircraft that receives a control input and transmits a control output in response to receiving the control input may include a pivot bearing, an actuator lever, a control receiving device, and a control transmitting device. The actuator lever may include a rotation center, a first end, and a second end, wherein the rotation center is pivotally mounted to the pivot bearing, and wherein the actuator lever transforms the control input into the control output by performing a rotational movement around the rotation center. The control receiving device is coupled to the first end of the actuator lever, receives the control input, and transmits the control input to the actuator lever. The control transmitting device is coupled to the second end of the actuator lever, receives the control output from the actuator lever, and transmits the control output. The actuator lever is at least partially provided with a composite material, wherein the actuator lever comprises a core comprising a first constituent material and a skin comprising second and third constituent materials, wherein the skin encompasses the core. The skin further comprises a first shell that covers a first side of the core, and a second shell that covers a second side of the core, wherein the first and second shells form a tube. The first and second shells overlap on two sides. The skin further comprises a first stiffener attached to a first one of the two sides, and a second stiffener attached to a second one of the two sides that is different than the first one of the two sides.

According to some aspects, the actuator lever that is at least partially provided with a composite material is reliable, stiff and easy to manufacture. As an example, the composite material may include carbon composites.

According to some aspects, the upper and lower plane of the actuator lever may be made with unidirectional fibers for high bending stiffness.

According to some aspects, the actuator lever made from composite material may include a foam core.

According to some aspects, a U-shaped profile may form the ends of the actuator lever and serve as a cap to enclose the foam core.

According to some aspects, the actuator levers may have a low weight and be easy to manufacture.

According to some aspects, the composite fiber design of the actuator lever may not need significant fiber direction change but provide adequate load introductions and be damage tolerant.

According to one aspect, the first constituent material comprises at least one of a polyurethane foam, a polyvinyl chloride foam, a polyethylene foam, a polystyrene foam, a syntactic foam, a metal foam, a graphene foam, a honeycomb, or a wood.

According to one aspect, the second constituent material further comprises a reinforcing phase that comprises at least one of glass fibers, carbon fibers, aramid fibers, basalt fibers, silicon carbide fibers, cellulose, textiles, ceramic fibers, or carbon nanotubes.

According to one aspect, the third constituent material further comprises a matrix material that comprises at least one of a resin, a polymer, or a ceramic.

According to one aspect, each one of the first and second shells further comprises a first hole at the first end of the actuator lever for receiving the control receiving device, and a second hole at the rotation center of the actuator lever for receiving the pivot bearing.

According to one aspect, the second hole at the rotation center is provided with a bearing laminate reinforcement.

According to one aspect, each one of the first and second shells further comprises fibers with an orientation of at least approximately 45 degrees relative to an axis through the first and second ends.

According to one aspect, the each one of the first and second stiffeners further comprises unidirectional fibers.

According to one aspect, the skin further comprises a first U-shaped cover that encompasses the core at the first end of the actuator lever to cover the first end, and a second U-shaped cover that encompasses the core at the second end of the actuator lever to cover the second end.

According to one aspect, each one of the first and second U-shaped covers further comprises a laminate reinforcement with quasi-isotropic lay-up.

According to one aspect, the actuator lever is selected from the group consisting of a straight control lever, a fork-shaped control lever, and a bell crank control lever.

Furthermore, a method for manufacturing the actuator lever of the control system may include the operations of receiving a plurality of composite parts comprising the core, first and second shell preforms, first and second stiffener preforms, and first and second U-shaped cover preforms, wherein the first and second shell preforms, the first and second stiffener preforms, and the first and second U-shaped cover preforms form a skin that encompasses the core, assembling the plurality of composite parts to produce an assembled actuator lever by placing the first and second shell preforms on first and second sides of the core, respectively, such that the first and second shell preforms form first and second overlap areas, by placing the first and second U-shaped cover preforms on the core such that the first and second U-shaped cover preforms encompass and cover the first and second ends of the actuator lever, and by placing the first and second stiffener preforms at the first and second overlap areas of the first and second shell preforms, and curing the assembled actuator lever in a closed mold to produce the actuator lever.

According to one aspect, curing the assembled actuator lever further comprises placing the assembled actuator lever into the closed mold, wherein the closed mold is a segmented mold, and applying a load in one direction onto the segmented mold to provide a settling path in two directions.

Embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative rotary-wing aircraft with a control system and an enlarged perspective view of the control system with a fork-shaped control lever and two straight control levers in accordance with some embodiments,
- Figure 2 is a diagram of an illustrative control system with bell crank control levers in accordance with some embodiments,
- Figure 3A is a diagram showing an exploded view of an illustrative straight control lever made from composite materials in accordance with some embodiments,
- Figure 3B is a diagram of an illustrative straight control lever made from composite materials in accordance with some embodiments,
- Figure 4A is a diagram showing an exploded view of an illustrative fork-shaped control lever made from composite materials in accordance with some embodiments,
- Figure 4B is a diagram of an illustrative fork-shaped control lever made from composite materials in accordance with some embodiments,
- Figure 5A is a diagram showing an exploded view of an illustrative bell crank control lever made from composite materials in accordance with some embodiments,
- Figure 5B is a diagram of an illustrative bell crank control lever made from composite materials in accordance with some embodiments,
- Figure 6 is a diagram of a cross section of an illustrative actuator lever made from composite materials in accordance with some embodiments,
- Figure 7 is a diagram of a cross section of an illustrative actuator lever made from composite materials inside a mold in accordance with some embodiments, and
- Figure 8 is a diagram of an illustrative flowchart showing operations for manufacturing an actuator lever of a control system in accordance with some embodiments.

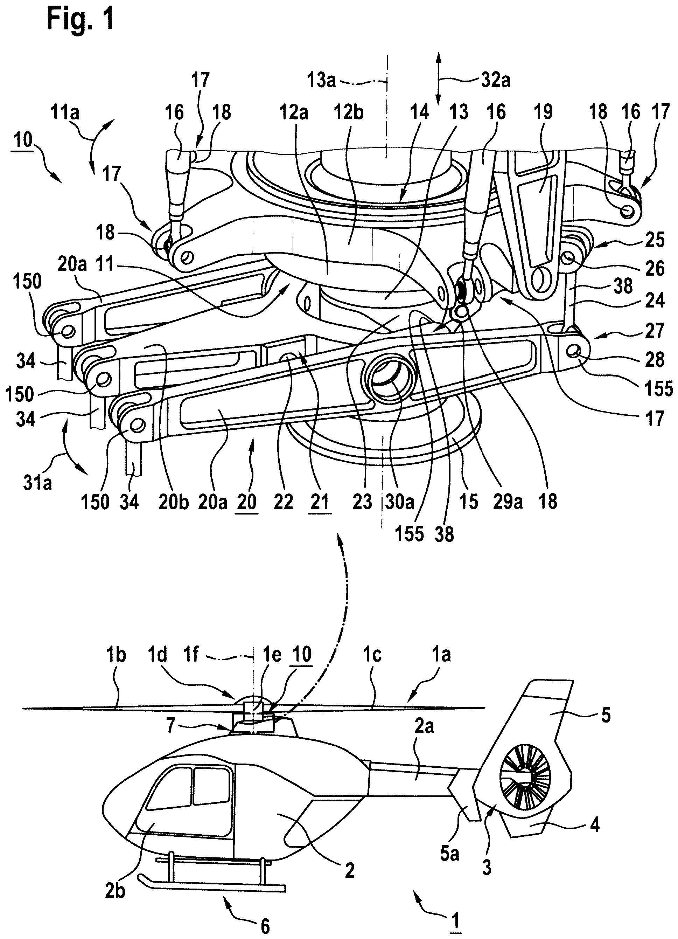

Figure 1 shows a rotary-wing aircraft 1 with a fuselage 2 that is connected to a landing gear 6, said fuselage 2 defining a tail boom 2a and a cabin 2b. The rotary-wing aircraft 1 comprises at least one multi-blade rotor 1a for providing lift and forward or backward thrust during operation. The at least one multi-blade rotor 1a comprises a plurality of rotor blades 1b, 1c that are mounted at an associated rotor head 1d to a rotor shaft 1e, which rotates in operation of the rotary-wing aircraft 1 around an associated rotor axis 1f.

By way of example, the rotary-wing aircraft 1 is embodied as a helicopter, which comprises at least one counter-torque device 3 configured to provide counter-torque during operation, i.e. to counter the torque created by rotation of the at least one multi-blade rotor 1a for purposes of balancing the rotary-wing aircraft 1 in terms of yaw. The at least one counter-torque device 3 is illustratively provided at an aft section of the tail boom 2a, which may comprise a bumper 4, a tail wing 5a, and a fin 5. The tail wing 5a may be adjustable in its inclination and may, thus, overtake the functioning of a horizontal stabilizer. Alternatively, or in addition, the rotary-wing aircraft 1 is provided with a suitable horizontal stabilizer.

However, it should be noted that the at least one counter-torque device 3, the tail wing 5a as well as the fin 5 with the bumper 4 provided at the aft section of the tail boom 2a are merely described for illustrating one exemplary embodiment of the rotary-wing aircraft 1 and not for limiting the invention accordingly. Instead, the present embodiments as described hereinafter can likewise be applied to any rotary-wing aircraft and, in particular, any helicopter or multicopter, independent of a respective construction of the aft section thereof.

According to one aspect, the rotary-wing aircraft 1 comprises a control system 10 for controlling at least collective pitch of the rotor blades 1b, 1c of the at least one multi-blade rotor 1a. If desired, control system 10 may control collective and cyclic pitch of the rotor blades 1b, 1c of the at least one multi-blade rotor 1a. The control system 10, which is further detailed in an enlarged perspective detail view, may be arranged at least partly on the rotor shaft 1e between the rotor head 1d of the at least one multi-blade rotor 1a and a main gear box 7 of the rotary-wing aircraft 1.

In some embodiments, the control system 10 may comprise a non-rotating sliding sleeve 13 that is mountable, and illustratively mounted to the rotor shaft 1e such that the non-rotating sliding sleeve 13 is axially displaceable coaxially to the rotor axis 1f on the rotor shaft 1e. The non-rotating sliding sleeve 13 may be connected to a fork-shaped control lever 20b that is pivotally mounted to the non-rotating sliding sleeve 13 and adapted for axially displacing the non-rotating sliding sleeve 13 that is mounted to the rotor shaft 1e upon activation.

If desired, control system 10 may include at least one hinge support 21 that is adapted for a hinged support of the fork-shaped control lever 20b such that a rotational movement of the fork-shaped control lever 20b on the at least one hinge support 21 upon activation is translatable into a pivotal movement of the fork-shaped control lever 20b on the non-rotating sliding sleeve 13 that is adapted to cause an axial displacement of the non-rotating sliding sleeve 13 that is mounted on the rotor shaft 1e in predetermined axial displacement directions 32a. The at least one hinge support 21 may include at least one carrier element that is adapted for carrying the fork-shaped control lever 20b. If desired, the at least one carrier element may comprise fiber reinforced composite material.

The at least one hinge support 21 and, more specifically, the at least one carrier element may carry the fork-shaped control lever 20b by means of an associated support member 22. The support member 22 may be embodied as a support rod that defines an associated rotation axis, around which the fork-shaped control lever 20b can be rotated to perform the above described rotational movement in predetermined rotational movement directions 31a.

According to one aspect, control system 10 may comprise swash plate assembly 11 with at least one non-rotating plate 12a and at least one rotating plate 12b that is mounted rotatably to the at least one non-rotating plate 12a. Illustratively, the at least one rotating plate 12b defines an upper swash plate and the at least one non-rotating plate 12a defines a lower swash plate of this swash plate assembly 11.

According to one aspect, the at least one rotating plate 12b and the at least one non-rotating plate 12a are mounted to the non-rotating sliding sleeve 13 having an associated sliding sleeve axis 13a. If desired, the non-rotating sliding sleeve 13 may be glidingly arranged on a non-rotating sliding sleeve guide 15. This non-rotating sliding sleeve guide 15 is adapted for accommodating at least partly the rotor shaft 1e of the at least one multi-blade rotor 1a, which illustratively extends in its longitudinal extension through said non-rotating sliding sleeve guide 15.

In some embodiments, the non-rotating sliding sleeve guide 15 is adapted for rigid fixation to a non-rotating part of the rotary-wing aircraft 1. Illustratively, the non-rotating sliding sleeve guide 15 is rigidly attached to the main gear box 7 of the rotary-wing aircraft 1, e. g. by means of screwing, bolting or bonding.

According to one aspect, the at least one rotating plate 12b is rotatable around the associated sliding sleeve axis 13a of the non-rotating sliding sleeve 13 and mounted with the at least one non-rotating plate 12a to a spherical bearing 14 that is provided on the non-rotating sliding sleeve 13.

In some embodiments, the at least one rotating plate 12b and the at least one non-rotating plate 12a are mounted to the spherical bearing 14 such that they are tiltable in any direction around the associated sliding sleeve axis 13a by means of said spherical bearing 14. Allowable tilting angles between the associated sliding sleeve axis 13a and the at least one non-rotating and rotating plates 12a, 12b may not exceed 20°, if desired.

The at least one rotating plate 12b may be connectable to each one of the rotor blades 1b, 1c by means of an associated pitch control rod 16. Therefore, external radial clevises 17, equal in number to the rotor blades 1b, 1c, are distributed over an external periphery of the at least one rotating plate 12b, and in each such external radial clevis 17 a ball joint 18 is held, which articulates a lower end of an associated pitch control rod 16, while its upper end can be articulated, and is illustratively articulated, in a pitch lever of an associated one of the rotor blades 1b, 1c. In some embodiments, the at least one rotating plate 12b is at least indirectly rotatably connectable, and is illustratively connected, to the rotor shaft 1e of the multi-blade rotor 1a by means of at least one associated rotating torque link, which is by way of example embodied as a rotating arm 19.

For controlling tilting and/or axial displacement of the at least one rotating plate 12b and the at least one non-rotating plate 12a in operation, a control input unit 20 is provided. This control input unit 20 may comprise two straight control levers 20a and one fork-shaped control lever 20b, which may be embodied as a fork unit 20b, such as a so-called mixing lever gear unit. Each straight control lever 20a is illustratively embodied as a lateral or outer arm of the control input unit 20. If desired, each straight control lever 20a may be rotatably connected to fork-shaped control lever 20b, which is illustratively embodied as an inner fork, by means of an associated straight control lever pivot bearing 30a.

Straight control lever 20a may be coupled at a first end 150 to control receiving device 34 and at a second end 155 to control transmitting device 38. Control receiving device 34 may receive a control input and transmit the control input to straight control lever 20a. Straight control lever 20a may transform the control input into a control output by performing a rotational movement around the straight control lever pivot bearing 30a. Control transmitting device 38 (e.g., embodied by associated swash plate control rod 24) may receive the control output from the actuator lever 20a and transmits the control output to the at least one non-rotating plate 12a, thereby controlling tilting of the at least one non-rotating plate 12a and, thus, of the at least one rotating plate 12b in any required tilting direction 11a around the rotor axis 1f, thereby performing cyclic pitch control of the rotor blades 1b, 1c.

Therefore, external radial clevises 25, equal in number to the associated swash plate control rods 24, are provided on an external periphery of the at least one non-rotating plate 12a, and in each such external radial clevis 25 a ball joint 26 is held, which articulates an upper end of an associated swash plate control rod 24, while its lower end is articulated in a corresponding ball joint 28, which is held in a clevis 27 provided on an extremity of an associated straight control lever 20a.

As described above, fork-shaped control lever 20b is provided for controlling axial displacement of the non-rotating sliding sleeve 13 in operation. Therefore, fork-shaped control lever 20b may be rotatably connected to a mounting part 23 of the non-rotating sliding sleeve 13 at a corresponding mounting point 29a. The mounting part 23 is illustratively formed at - or by - a lower section of the non-rotating sliding sleeve 13.

It should be noted that the above described configuration of the control system 10 is merely described for purposes of illustration and not for restricting the invention thereto. Instead, various modifications and variations are readily available and recognizable to the skilled person and, therefore, also considered as being part of the present invention. For instance, instead of the spherical bearing 14, gimbals with e.g. cardan-joint or u-joint rings for mounting at least the non-rotating plate 12a of the swash plate assembly 11 of the control system 10 in an oscillating manner can be used, etc.

Fork-shaped control lever 20b may be coupled at a first end 150 to control receiving device 34 and at a second end 155 to control transmitting device 38. Control receiving device 34 may receive a control input and transmit the control input to fork-shaped control lever 20b. Fork-shaped control lever 20b may transform the control input into a control output by performing a rotational movement around pivot bearing 22. Control transmitting device 38 (e.g., embodied by non-rotating sliding sleeve 13) may receive the control output from actuator lever 20a and transmit the control output.

In other words, during operation of the control system 10, a rotational movement of fork-shaped control lever 20b into one of the rotational movement directions 31a around the support member 22 is translated into an axial displacement of the non-rotating sliding sleeve 13 and, thus, of the swash plate assembly 11, into an associated one of the axial displacement directions 32a along the associated sliding sleeve axis 13a. Thereby, collective pitch of the rotor blades 1b, 1c, i.e. a change of the pitch angle of the rotor blades independent of the angular position around the rotor axis, can be controlled.

In some embodiments, a rotational movement of the at least one straight control lever 20a around the associated straight control lever pivot bearing 30a into one of the rotational movement directions 31a is translated via the associated swash plate control rods 24 into a tilting of the swash plate assembly 11 into a corresponding one of the swash plate tilting directions 11a around the associated sliding sleeve axis 13a. Thereby, cyclic pitch of the rotor blades 1b, 1c, i.e. a change of the pitch angle of the rotor blades based on the angular position of the rotor blades around the rotor axis can be controlled.

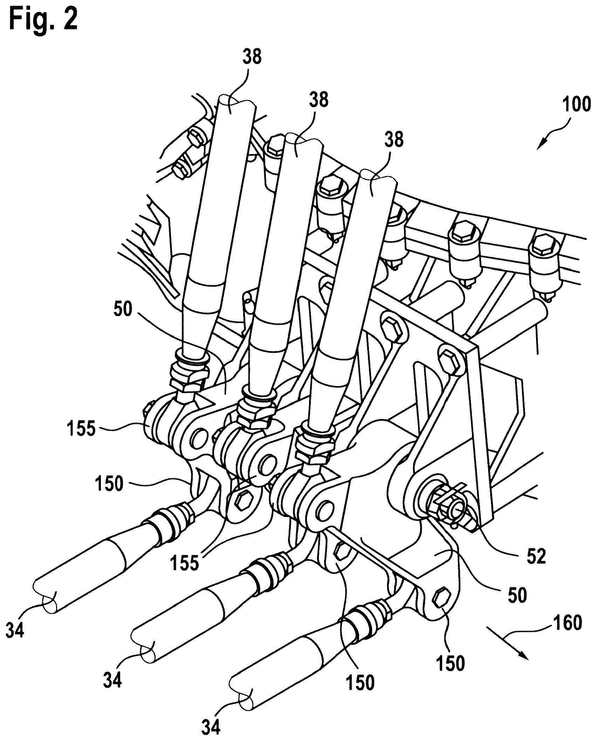

In some embodiments, rotary-wing aircraft 1 may include an additional control system such as control system 100 of Figure 2. As shown, control system 100 may include bell crank control levers 50 that are rotatably arranged on a stationary part of the rotary-wing aircraft 1 by means of pivot bearings 52, thereby enabling a rotation of bell crank control lever 50 around axis 160.

Bell crank control lever 50 may be coupled at a first end 150 to control receiving device 34 and at a second end 155 to control transmitting device 38. Control receiving device 34 may receive a control input and transmit the control input to bell crank control lever 50. Bell crank control lever 50 may transform the control input into a control output by performing a rotational movement around axis 160. Control transmitting device 38 may receive the control output from bell crank control lever 50 and transmit the control output, e.g., to straight control lever 20a or fork-shaped control lever 20b of Figure 1.

As an example, bell crank control lever 50 may receive a pull from control receiving device 34, and, as a result, transmit a push to control transmitting device 38. Similarly, bell crank control lever 50 may receive a push from control receiving device 34, and, as a result, transmit a pull to control transmitting device 38.

An actuator lever such as bell crank control lever 50 or straight control lever 20a or fork-shaped control lever 20b of Figure 1 is at least partially provided with a composite material. Such bell crank control lever 50, straight control lever 20a, or fork-shaped control lever 20b of Figures 1 and 2 includes a core comprising a first constituent material and a skin comprising second and third constituent materials. The skin encompasses the core.

Examples for first constituent materials may include any suitable constituent material for forming a core such as polyurethane (PU) foam, polyvinyl chloride (PVC) foam, polyethylene foam, polystyrene foam, syntactic foam, metal foam, graphene foam, or other foams, honeycombs, woods, just to name a few.

Examples for second and third constituent materials may include any suitable constituent materials for forming a skin. Such constituent materials may include a matrix material, which is sometimes also referred to as a matrix phase or a background material, and a transforming material, which is sometimes also referred to as a reinforcement or a reinforcing phase. Examples for reinforcements include fibers and fabrics such as glass fibers, carbon fibers, aramid fibers, basalt fibers, silicon carbide fibers, cellulose (e.g., wood, paper, straw, flax, etc.), textiles, ceramic fibers, as well as carbon nanotubes, or any other reinforcement material that is suitable for forming a skin together with a matrix material. Examples for matrix materials include resins, polymers, ceramics, etc., or any other matrix material that is suitable for forming a skin together with a transforming material.

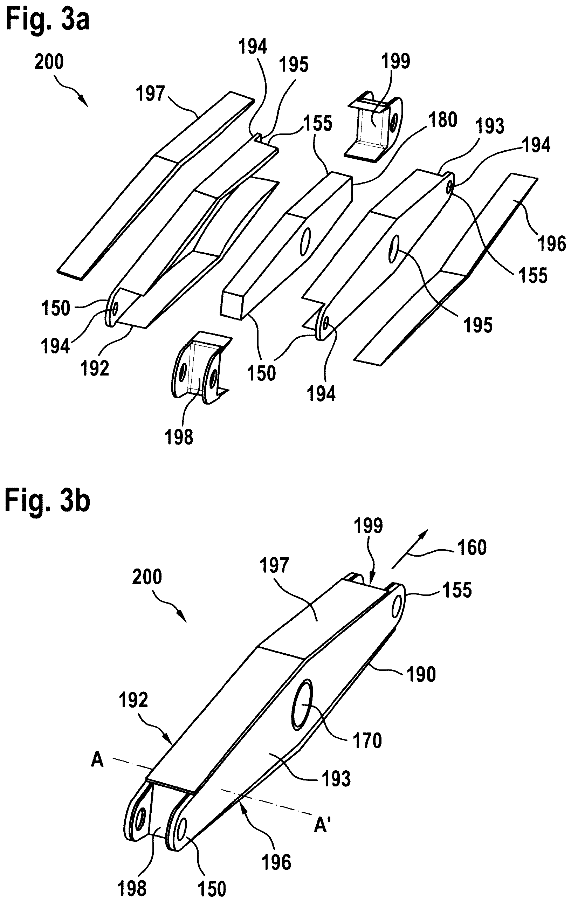

Figure 3A is a diagram showing an exploded view of an illustrative straight control lever 200 made from composite materials. As shown, straight control lever 200 may include core 180 and a skin that encompasses core 180. The skin includes shells 192 and 193, stiffeners 196 and 197, and, in some embodiments, U-shaped covers 198 and 199. If desired, at least one of shells 192, 193, stiffeners 196, 197, or U-shaped covers 198, 199 may be a preform, i. e. may be made from a preform.

Shells 192 and 193 have a U-shaped profile and overlap each other, thereby forming a tube. Shells 192 and 193 may be provided with mainly ± 45° lay-up relative to an axis through ends 150 and 155.

Shells 192 and 193 may have holes 194 at ends 150 and 155 for receiving a control receiving device (e.g., control receiving device 34 of Figure 1) and a control transmitting device (e.g., control transmitting device 38 of Figure 1), respectively.

Shells 192 and 193 may have hole 195 at rotation center 170 for receiving a pivot bearing (e.g., pivot bearing 30a of Figure 1). Hole 195 may be provided with a skin that covers the inside boundaries of a corresponding hole through core 180. If desired, hole 195 at rotation center 170 may be provided with a bearing laminate reinforcement.

Straight control lever 200 may have stiffeners 196 and 197 that may be arranged on at least one side of core 180. Shells 192 and 193 have U-shapes and overlap each other at the sides of core 180. Stiffener 196 is attached to one of the sides at which shells 192 and 193 overlap, and stiffener 197 is attached to the other side at which shells 192 and 193 overlap. If desired, stiffeners 196 and 197 may be attached to core 180, and U-shaped shells 192 and 193 may encompass core 180 and stiffeners 196 and 197.

In some embodiments, stiffeners 196 and 197 may include unidirectional fibers, i.e., fibers with a 0° lay-up relative to an axis through ends 150 and 155 to improve stiffness behavior of straight control lever 200.

Straight control lever 200 may have U-shaped covers 198 and 199 that may cover core 180 at ends 150 and 155, respectively. U-shaped covers 198 and 199 may include a laminate reinforcement with quasi-isotropic lay-up.

U-shaped covers 198 and 199 may each have holes. If desired, the holes of U-shaped cover 198 may correspond to holes 194 of shells 192 and 193 at end 150 and receive control receiving device (e.g., control receiving device 34 of Figure 1). The holes of U-shaped cover 199 may correspond to holes 194 of shells 192 and 193 at end 155 and receive control transmitting device (e.g., control transmitting device 38 of Figure 1).

Figure 3B is a diagram of an illustrative straight control lever 200 made from composite materials. As shown, shells 192 and 193 may form the sides of straight control lever 200, stiffeners 196 and 197 may form bottom and top of straight control lever 200, respectively, and U-shaped covers 198 and 199 may cover ends 150 and 155, respectively, to form skin 190 of straight control lever 200.

If desired, shells 192 and 193 may have a U-shaped profile and overlap on the top and the bottom of straight control lever 200, thereby forming a tube.

Shells 192 and 193 may have hole 195 at rotation center 170 for receiving a pivot bearing (e.g., pivot bearing 30a of Figure 1). Shells 192 and/or 193 may form a ring shape that covers the inside of hole 195 at rotation center 170. If desired, hole 195 at rotation center 170 may be provided with a bearing laminate reinforcement.

Shells 192 and 193 may have holes 194 at ends 150 and 155. Holes 194 may be aligned with holes of U-shaped covers 198 and 199 and receive control receiving device (e.g., control receiving device 34 of Figure 1) as well as control transmitting device (e.g., control transmitting device 38 of Figure 1). U-shaped covers 198 and 199 may include a laminate reinforcement with quasi-isotropic lay-up.

Stiffeners 196 and 197 may be arranged at the bottom and at the top of straight control lever 200, respectively. If desired, stiffeners 196 and 197 may be attached to skins 192, 193 and U-shaped covers 198, 199. In some embodiments, stiffeners 196 and 197 may include unidirectional fibers, i.e., fibers with a 0° lay-up relative to axis 160 through ends 150 and 155 to improve stiffness behavior of straight control lever 200.

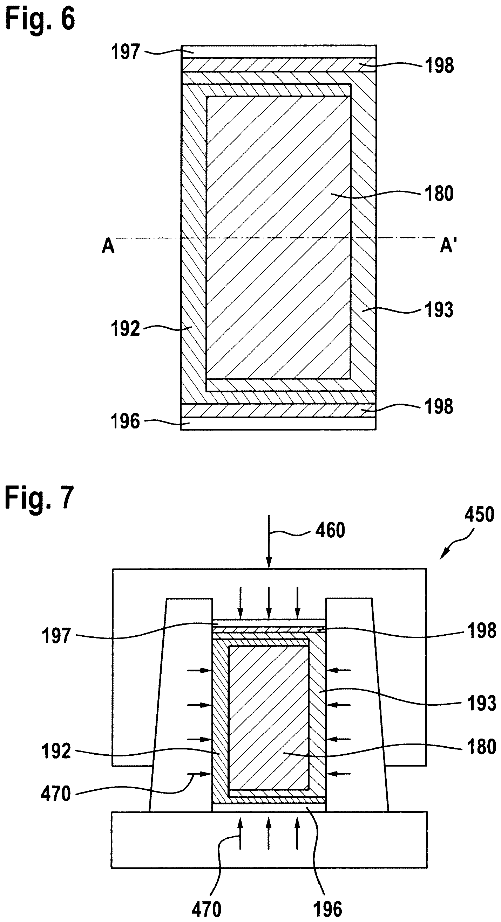

Straight control lever 200 may provide a rectangular tube cross section that is optimized and tailored to torsional- and bending loading as illustrated in Figure 6 below.

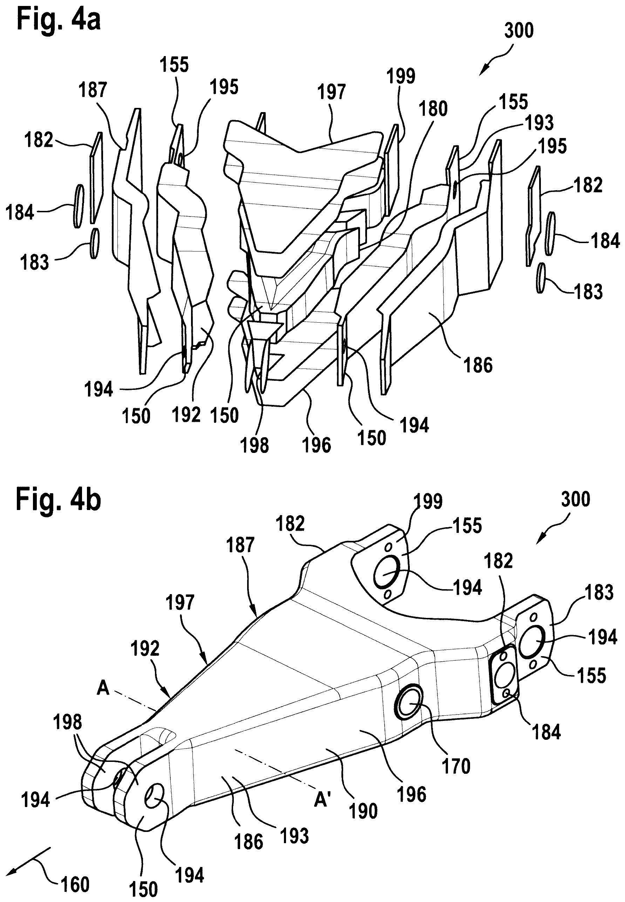

Figure 4A is a diagram showing an exploded view of an illustrative fork-shaped control lever made from composite materials in accordance with some embodiments.

As shown, fork-shaped control lever 300 includes core 180 and a skin that encompasses core 180. The skin includes shells 192 and 193, stiffeners 196 and 197, and, in some embodiments, U-shaped covers 198 and 199. If desired, at least one of shells 192, 193, stiffeners 196, 197, or U-shaped covers 198, 199 may be a preform, i. e. may be made from a preform. In some embodiments, the skin may include fixation stiffeners 186 and 187 as well as fixation parts 181, 182, 183, 184, and 185.

Shells 192 and 193 have a U-shaped profile and overlap each other at least partially, thereby forming a tube. Shells 192 and 193 may be provided with mainly ± 45° lay-up.

Shells 192 and 193 may have holes 194 at ends 150 and 155 for receiving a control receiving device (e.g., control receiving device 34 of Figure 1) and a control transmitting device (e.g., control transmitting device 38 of Figure 1), respectively.

Shells 192 and 193 may have hole 195 at rotation center 170 for receiving a pivot bearing (e.g., pivot bearing 22 of Figure 1). Hole 195 may be provided with a skin that covers the inside boundaries of a corresponding hole through core 180. In some embodiments, core 180 may not have a hole, and rotation center 170 may be located in the fork portion (i.e., in each one of the branches) of fork-shaped control lever 300. If desired, hole 195 at rotation center 170 may be provided with a bearing laminate reinforcement.

Fork-shaped control lever 300 may have stiffeners 196 and 197 that may be arranged on two sides of core 180. In some embodiments, shells 192 and 193 may have U-shapes and at least partial overlap each other. In these embodiments, stiffener 196 may be attached to one side at which shells 192 and 193 overlap, and stiffener 197 may be attached to the other side at which shells 192 and 193 overlap. If desired, stiffeners 196 and 197 may be attached to core 180, and U-shaped shells 192 and 193 may encompass core 180 and stiffeners 196 and 197.

In some embodiments, stiffeners 196 and 197 may include unidirectional fibers, i.e., fibers with a 0° lay-up to improve stiffness behavior of fork-shaped control lever 300.

Fork-shaped control lever 300 may have U-shaped covers 198 and 199 that may cover core 180 at ends 150 and 155, respectively. U-shaped covers 198 and 199 may include a laminate reinforcement with quasi-isotropic lay-up.

U-shaped cover 198 may have holes. If desired, the holes of U-shaped cover 198 may correspond to holes 194 of shells 192 and 193 at end 150 and receive control receiving device (e.g., control receiving device 34 of Figure 1).

U-shaped cover 199 may have holes. If desired, at least some of the holes of U-shaped cover 199 may correspond to holes 194 of shells 192 and 193 at end 155 and receive control transmitting device (e.g., control transmitting device 38 of Figure 1). The at least some holes of U-shaped cover 199 may receive fixation parts 183, if desired.

In some embodiments, U-shaped cover 199 may have additional holes for receiving fixation parts 182 and 184, for example for installing a single lap joint that receives a straight control lever such as straight control lever 200 of Figure 2. Fixation parts 182 and 184 may improve load introduction form the single lap joint to ensure adequate bending moment introduction. If desired, fixation parts 182 and 184 may form a single fixation part.

Fixation stiffeners 186 and 187 may improve the stiffness behavior of fixation parts 182 to 184. Fixation stiffeners 186 and 187 may be attached to shells 192 and 192, respectively. In some embodiments, fixation stiffeners 186 and 187 may include unidirectional fibers, i.e., fibers with a 0° lay-up to improve stiffness behavior of fork-shaped control lever 300.

Figure 4B is a diagram of an illustrative fork-shaped control lever made from composite materials in accordance with some embodiments. As shown, shells 192 and 193 with or without fixation stiffeners 186 and 187 may form the sides of fork-shaped control lever 300, stiffeners 196 and 197 may form bottom and top of fork-shaped control lever 300, respectively, and U-shaped covers 198 and 199 may cover ends 150 and 155, respectively, to form skin 190 of fork-shaped control lever 300.

If desired, shells 192 and 193 may have a U-shaped profile. Shells 192 and 193 with the U-shaped profile may overlap each other at least partially on the top and the bottom of fork-shaped control lever 300. If desired, shells 192 and 193 may completely overlap each other, thereby forming a tube.

Shells 192 and 193 may have one or more holes 195 at rotation center 170 for receiving a pivot bearing (e.g., pivot bearing 22 of Figure 1). Shells 192 and/or 193 may form a ring shape that covers the inside of holes 195 at rotation center 170. If desired, holes 195 at rotation center 170 may be provided with a bearing laminate reinforcement.

Shells 192 and 193 may have holes 194 at ends 150 and 155. Holes 194 may be aligned with holes of U-shaped covers 198 and 199 and receive control receiving device (e.g., control receiving device 34 of Figure 1) as well as control transmitting device (e.g., control transmitting device 38 of Figure 1). U-shaped covers 198 and 199 may include a laminate reinforcement with quasi-isotropic lay-up. The holes of U-shaped cover 199 may receive fixation parts 183.

In some embodiments, U-shaped cover 199 may have additional holes for receiving fixation parts 182 and 184, for example for installing a single lap joint that receives a straight control lever such as straight control lever 200 of Figure 2. Fixation parts 182 and 184 may improve load introduction form the single lap joint to ensure adequate bending moment introduction. If desired, fixation parts 182 and 184 may form a single fixation part.

Stiffeners 196 and 197 may be arranged at the bottom and at the top of fork-shaped control lever 300, respectively. If desired, stiffeners 196 and 197 may be attached to skins 192, 193 and U-shaped covers 198, 199.

Fixation stiffeners 186 and 187 may improve the stiffness behavior of fixation parts 182 to 184. Fixation stiffeners 186 and 187 may be attached to shells 192 and 192, respectively.

In some embodiments, fixation stiffeners 186 and 187 and/or stiffeners 196 and 197 may include unidirectional fibers, i.e., fibers with a 0° lay-up relative to axis 160 through end 150 to improve stiffness behavior of fork-shaped control lever 300.

Fork-shaped control lever 300 may provide a rectangular tube cross section that is optimized and tailored to torsional- and bending loading as illustrated in Figure 6 below.

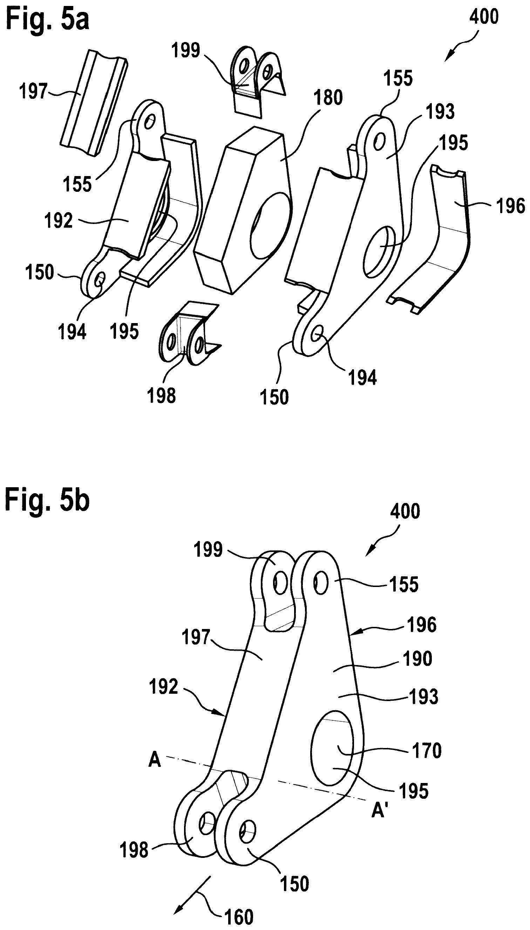

Figure 5A is a diagram showing an exploded view of an illustrative bell crank control lever 400 made from composite materials. As shown, bell crank control lever 400 may include core 180 and a skin that encompasses core 180. In some embodiments, the skin may include shells 192 and 193, stiffeners 196 and 197, and U-shaped covers 198 and 199. If desired, at least one of shells 192, 193, stiffeners 196, 197, or U-shaped covers 198, 199 may be a preform, i. e. may be made from a preform.

Shells 192 and 193 have a U-shaped profile and overlap each other, thereby forming a tube. Shells 192 and 193 may be provided with mainly ± 45° lay-up.

Shells 192 and 193 may have holes 194 at ends 150 and 155 for receiving a control receiving device (e.g., control receiving device 34 of Figure 2) and a control transmitting device (e.g., control transmitting device 38 of Figure 2), respectively.

Shells 192 and 193 may have hole 195 at rotation center 170 for receiving a pivot bearing (e.g., pivot bearing 52 of Figure 2). Hole 195 may be provided with a skin that covers the inside boundaries of a corresponding hole through core 180. If desired, hole 195 at rotation center 170 may be provided with a bearing laminate reinforcement.

Bell crank control lever 400 may have stiffeners 196 and 197 that may be arranged on at least one side of core 180. Shells 192 and 193 have U-shapes and overlap each other at least partially at the sides of core 180. In these embodiments, stiffener 196 is attached to one of the sides at which shells 192 and 193 overlap, and stiffener 197 is attached to the other side at which shells 192 and 193 overlap. If desired, stiffeners 196 and 197 may be attached to core 180, and U-shaped shells 192 and 193 may encompass core 180 and stiffeners 196 and 197.

In some embodiments, stiffeners 196 and 197 may include unidirectional fibers, i.e., fibers with a 0° lay-up.

Bell crank control lever 400 may have U-shaped covers 198 and 199 that may cover core 180 at ends 150 and 155, respectively. U-shaped covers 198 and 199 may include a laminate reinforcement with quasi-isotropic lay-up.

U-shaped covers 198 and 199 may each have holes. If desired, the holes of U-shaped cover 198 may correspond to holes 194 of shells 192 and 193 at end 150 and receive control receiving device (e.g., control receiving device 34 of Figure 2). The holes of U-shaped cover 199 may correspond to holes 194 of shells 192 and 193 at end 155 and receive control transmitting device (e.g., control transmitting device 38 of Figure 2).

Figure 5B is a diagram of an illustrative bell crank control lever 400 made from composite materials. As shown, shells 192 and 193 may form the sides of bell crank control lever 400, stiffeners 196 and 197 may form an L-shaped bottom and a straight-shaped top of bell crank control lever 400, respectively, and U-shaped covers 198 and 199 may cover ends 150 and 155, respectively, to form skin 190 of bell crank control lever 400.

If desired, shells 192 and 193 may have a U-shaped profile and overlap on the top and the bottom of bell crank control lever 400, thereby forming a tube or a triangular-shaped box.

Shells 192 and 193 may have hole 195 at rotation center 170 for receiving a pivot bearing (e.g., pivot bearing 52 of Figure 2). Shells 192 and/or 193 may form a ring shape that covers the inside of hole 195 at rotation center 170. If desired, hole 195 at rotation center 170 may be provided with a bearing laminate reinforcement.

Shells 192 and 193 may have holes 194 at ends 150 and 155. Holes 194 may be aligned with holes of U-shaped covers 198 and 199 and receive control receiving device (e.g., control receiving device 34 of Figure 2) and control transmitting device (e.g., control transmitting device 38 of Figure 2), respectively. U-shaped covers 198 and 199 may include a laminate reinforcement with quasi-isotropic lay-up.

L-shaped stiffener 196 and straight stiffener 197 may be arranged at the bottom and at the top of bell crank control lever 400, respectively. If desired, stiffeners 196 and 197 may be attached to skins 192, 193 and U-shaped covers 198, 199. In some embodiments, stiffeners 196 and 197 may include unidirectional fibers, i.e., fibers with a 0° lay-up to improve stiffness behavior of bell crank control lever 400.

Bell crank control lever 400 may provide a rectangular tube cross section that is optimized and tailored to torsional- and bending loading as illustrated in Figure 6 below.

Figure 6 is a diagram of a cross section of an illustrative actuator lever such as straight control lever 200, fork-shaped control lever 300, or bell crank control lever 400 of Figures 3A to 5B made from composite materials in accordance with some embodiments.

The cross section of the actuator lever shows core 180, shells 192 and 193, stiffeners 196 and 197, and U-shaped cover 198. Shells 192 and 193 may have a U-shape at the cross section and encompass core 180. As shown, shells 192 and 193 may overlap each other on at least two sides of core 180. U-shaped cover 198 may cover each of the at least two sides at which shells 192 and 193 overlap. Stiffeners 196 and 197 may be arranged at the bottom and at the top of the actuator lever, respectively. Stiffeners 196 and 197 may be attached to U-shaped cover 198.

In some embodiments, shells 192 and 193, stiffeners 196 and 197, and U-shaped cover 198 may be arranged differently. For example, stiffeners 196 and 197 may be attached to core 180, U-shaped cover 198 to stiffeners 196 and 197, and shells 192 and 193 encompass U-shaped cover 198. As another example, U-shaped cover 198 may be attached to core 180, stiffeners 196 and 197 to U-shaped cover 198, and shells 192 and 193 encompass stiffeners 196 and 197. In some embodiments, shells 192 and 193 may be separated by stiffeners 196 and 197, etc.

In some embodiments, a fixation stiffener such as fixation stiffeners 186 and 187 of Figures 4A and 4B may be attached to shells 192 and 193.

Figure 7 is a diagram of a cross section of an illustrative actuator lever such as straight control lever 200, fork-shaped control lever 300, or bell crank control lever 400 of Figures 3A to 5B made from composite materials inside a mold in accordance with some embodiments.

For example, composite parts comprising core 180, shells 192 and 193, stiffeners 196 and 197, and U-shaped covers 198 and 199 may be draped on individual particular positive form toolings with a short pre-compacting process. Shells 192, 193, stiffeners 196, 197, and U-shaped covers 198, 199 may be assembled on core 180 to produce an assembled actuator lever. The assembled actuator lever may be cured in a closed mold.

For example, the assembled actuator lever may be placed in a closed mold, which may be embodied by segmented mold 450. Applying a load 460 in one direction onto segmented mold 450 may provide settling path 470 in more than one direction.

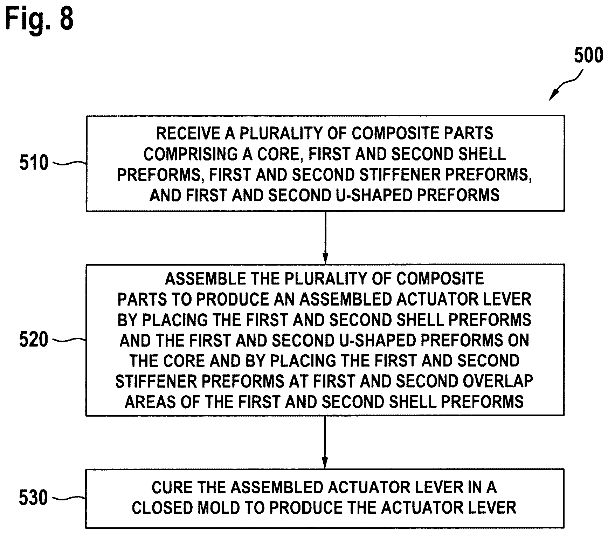

Figure 8 is a diagram of an illustrative flowchart showing operations for manufacturing an actuator lever of a control system in accordance with some embodiments. As an example, an assembly line and/or an operator of the assembly line may perform operations 510, 520, and 530 of method 500.

During operation 510, the assembly line and/or the operator may receive a plurality of composite parts comprising a core, first and second shell preforms, first and second stiffener preforms, and first and second U-shaped cover preforms. For example, an assembly line and/or an operator may receive core 180, shell preforms 192, 193, stiffener preforms 196, 197, and U-shaped cover preforms 198, 199 of any one of Figures 3A, 4A, or 5A.

During operation 520, the assembly line and/or the operator may assemble the plurality of composite parts to produce an assembled actuator lever by placing the first and second shell preforms and the first and second U-shaped cover preforms on the core and by placing the first and second stiffener preforms at first and second overlap areas of the first and second shell preforms. For example, an assembly line and/or an operator may assemble the plurality of composite parts to produce an assembled actuator lever by placing shell preforms 192, 193 and U-shaped cover preforms 198, 199 on core and by placing the stiffener preforms 196, 197 at overlap areas of the shell preforms 192, 193 of any one of Figures 3B, 4B, or 5B.

During operation 530, the assembly line and/or the operator may cure the assembled actuator lever in a closed mold to produce the actuator lever. For example, an assembly line and/or an operator may cure the assembled actuator lever in closed mold 450 to produce the actuator lever.

It should be noted that the above described embodiments are merely described to illustrate possible realizations of the present invention, but not in order to restrict the present invention thereto. Instead, multiple modifications and variations of the described embodiments are possible and should, therefore, also be considered as being part of the invention.

By way of example, actuator levers 200, 300, or 400 of Figures 3A to 5B are shown to have a predetermined number of preforms, i. e. may be made from a predetermined number of preforms. However, actuator levers 200, 300, or 400 may include a different number of preforms, i. e. may be made from a different number of preforms. As an example, the number of preforms may depend on the degree of the drapability and required overlapping joints. As another example, U-shaped shell 192 and/or U-shaped shell 193 may be replaced by two L-shaped shells, respectively.

Furthermore, actuator levers 200, 300, and 400 of Figures 3A to 5B are shown to have U-shaped covers 198 and 199. However, U-shaped covers 198 and/or 199 may be part of either shell 192 or 193. As another example, U-shaped cover 198 may be integrated into shell 192, while U-shaped cover 199 is integrated into shell 193.

Moreover, straight control lever 200 and bell crank control lever 400 are shown without fixation stiffeners. If desired, straight control lever 200 and bell crank control lever 400 may include fixation stiffeners 186 and/or 187 that may be attached to shells 192 and 193, respectively.

Furthermore, straight control lever 200, fork-shaped control lever 300, and bell crank control lever 400 are illustratively introduced as being part of a control system for a rotary-wing aircraft. However, straight control lever 200, fork-shaped control lever 300, and bell crank control lever 400 may be part of any control system in which a mechanical control input signal is transformed into a mechanical control output signal.

### Reference List

- 1: rotary-wing aircraft
- 1a: multi-blade rotor
- 1b, 1c: rotor blades
- 1d: rotor head
- 1e: rotor shaft
- 1f: rotor axis
- 2: fuselage
- 2a: tail boom
- 2b: cabin
- 3: counter-torque device
- 4: bumper
- 5: fin
- 5a: tail wing
- 6: landing gear
- 7: main gear box
- 10: control system
- 11: swash plate assembly
- 11a: swash plate tilting directions
- 12a: non-rotating plate
- 12b: rotating plate
- 13: non-rotating sliding sleeve
- 13a: sliding sleeve axis
- 14: spherical bearing
- 15: non-rotating sliding sleeve guide
- 16: pitch control rods
- 17: rotating plate clevises
- 18: rotating plate ball joints
- 19: rotating arms
- 20: control input unit
- 20a: straight control lever
- 20b: fork-shaped control lever
- 21: straight control lever hinge support
- 22: pivot bearing
- 23: sliding sleeve mounting part
- 24: swash plate control rods
- 25: non-rotating plate clevises
- 26: non-rotating plate ball joints
- 27: straight control lever clevises
- 28: straight control lever ball joints
- 29a: straight control lever mounting point
- 30a: actuator lever pivot bearing
- 31a: straight control lever rotational movement directions
- 32a: sliding sleeve axial displacement directions
- 34: control receiving device
- 38: control transmitting device
- 50: bell crank control lever
- 52: pivot bearing
- 100: control system
- 150, 155: actuator lever end
- 160: axis
- 170: rotation center
- 180: core
- 182, 183, 184: fixation part
- 186, 187: fixation stiffener
- 190: skin
- 192, 193: shell (preform)
- 194, 195: hole
- 196, 197: stiffener (preform)
- 198, 199: U-shaped cover (preform)
- 200: straight control lever
- 300: fork-shaped control lever
- 400: bell crank control lever
- 450: mold
- 460: load
- 470: settling path
- 500: method
- 510, 520, 530: operations

## Claims

1. A control system (10) for a rotary-wing aircraft (1) that receives a control input and transmits a control output in response to receiving the control input, comprising:
a pivot bearing (30a);
an actuator lever (20a, 20b, 50) that comprises a rotation center (170), a first end (150), and a second end (155), wherein the rotation center (170) is pivotally mounted to the pivot bearing (30a), and wherein the actuator lever (20a, 20b, 50) transforms the control input into the control output by performing a rotational movement around the rotation center (170);
a control receiving device (34) that is coupled to the first end (150) of the actuator lever (20a, 20b, 50), wherein the control receiving device (34) receives the control input and transmits the control input to the actuator lever (20a, 20b, 50); and
a control transmitting device (38) that is coupled to the second end (155) of the actuator lever (20a, 20b, 50), wherein the control transmitting device (38) receives the control output from the actuator lever (20a, 20b, 50) and transmits the control output, **characterized in that**
the actuator lever (20a, 20b, 50) is at least partially provided with a composite material, wherein the actuator lever (20a, 20b, 50) comprises a core (180) comprising a first constituent material and a skin (190) comprising second and third constituent materials, wherein the skin (190) encompasses the core (180), and **in that**
the skin (190) further comprises:
a first shell (192) that covers a first side of the core (180);
a second shell (193) that covers a second side of the core (180), wherein the first and second shells (192, 193) form a tube and overlap on two sides;
a first stiffener (196) attached to a first one of the two sides; and
a second stiffener (197) attached to a second one of the two sides that is different than the first one of the two sides.

2. The control system (10) of claim 1, wherein the first constituent material comprises at least one of a polyurethane foam, a polyvinyl chloride foam, a polyethylene foam, a polystyrene foam, a syntactic foam, a metal foam, a graphene foam, a honeycomb, or a wood.

3. The control system (10) of any one of claims 1 or 2, wherein the second constituent material further comprises:
a reinforcing phase that comprises at least one of glass fibers, carbon fibers, aramid fibers, basalt fibers, silicon carbide fibers, cellulose, textiles, ceramic fibers, or carbon nanotubes.

4. The control system (10) of any one of the preceding claims, wherein the third constituent material further comprises:
a matrix material that comprises at least one of a resin, a polymer, or a ceramic.

5. The control system (10) of claim 1, wherein each one of the first and second shells (192, 193) further comprises:
a first hole (194) at the first end (150) of the actuator lever (20a, 20b, 50) for receiving the control receiving device (34); and
a second hole (195) at the rotation center (170) of the actuator lever (20a, 20b, 50) for receiving the pivot bearing (30a).

6. The control system (10) of claim 5, wherein the second hole (195) at the rotation center (170) is provided with a bearing laminate reinforcement.

7. The control system (10) of claim 5, wherein each one of the first and second shells (192, 193) further comprises fibers with an orientation of at least approximately 45 degrees relative to an axis (160) through the first and second ends (150, 155).

8. The control system (10) of claim 1, wherein each one of the first and second stiffeners (196, 197) further comprises unidirectional fibers.

9. The control system (10) of any one of the preceding claims, wherein the skin (190) further comprises:
a first U-shaped cover (198) that encompasses the core (180) at the first end (150) of the actuator lever (20a, 20b, 50) to cover the first end; and
a second U-shaped cover (199) that encompasses the core (180) at the second end (155) of the actuator lever (20a, 20b, 50) to cover the second end.

10. The control system (10) of claim 9, wherein each one of the first and second U-shaped covers (198, 199) further comprises a laminate reinforcement with quasi-isotropic lay-up.

11. The control system (10) of any one of the preceding claims, wherein the actuator lever (20a, 20b, 50) is selected from the group consisting of a straight control lever (200), a fork-shaped control lever (300), and a bell crank control lever (400).

12. A method (500) for manufacturing the actuator lever (20a, 20b, 50) of the control system (10) of claim 9, comprising:
receiving (510) a plurality of composite parts comprising the core (180), first and second shell preforms (192, 193), first and second stiffener preforms (196, 197), and first and second U-shaped cover preforms (198, 199), wherein the first and second shell preforms (192, 193), the first and second stiffener preforms (196, 197), and the first and second U-shaped cover preforms (198, 199) form a skin (190) that encompasses the core (180);
assembling (520) the plurality of composite parts to produce an assembled actuator lever by placing the first and second shell preforms (192, 193) on first and second sides of the core (180), respectively, such that the first and second shell preforms (192, 193) form first and second overlap areas, by placing the first and second U-shaped cover preforms (198, 199) on the core (180) such that the first and second U-shaped cover preforms (198, 199) encompass and cover the first and second ends (150, 155) of the actuator lever (20a, 20b, 50), and by placing the first and second stiffener preforms (196, 197) at the first and second overlap areas of the first and second shell preforms (192, 193); and
curing (530) the assembled actuator lever in a closed mold (450) to produce the actuator lever (20a, 20b, 50).

13. The method of claim 12, wherein curing the assembled actuator lever further comprises:
placing (540) the assembled actuator lever into the closed mold (450), wherein the closed mold (450) is a segmented mold (450); and
applying (550) a load (460) in one direction onto the segmented mold (450) to provide a settling path (470) in two directions.

## Patentansprüche

1. Steuersystem (10) für ein Drehflügelflugzeug (1), das eine Steuereingabe empfängt und als Reaktion auf den Empfang der Steuereingabe eine Steuerausgabe überträgt, umfassend:
ein Drehlager (30a);
einen Betätigungshebel (20a, 20b, 50), der einen Drehmittelpunkt (170), ein erstes Ende (150) und ein zweites Ende (155) umfasst, wobei der Drehmittelpunkt (170) schwenkbar an dem Drehlager (30a) angebracht ist, und wobei der Betätigungshebel (20a, 20b, 50) die Steuereingabe in die Steuerausgabe umwandelt, indem er eine Drehbewegung um den Drehmittelpunkt (170) ausführt;
eine Steuerempfangsvorrichtung (34), die mit dem ersten Ende (150) des Betätigungshebels (20a, 20b, 50) gekoppelt ist, wobei die Steuerempfangsvorrichtung (34) die Steuereingabe empfängt und die Steuereingabe an den Betätigungshebel (20a, 20b, 50) überträgt; und
eine Steuerübertragungsvorrichtung (38), die mit dem zweiten Ende (155) des Betätigungshebels (20a, 20b, 50) gekoppelt ist, wobei die Steuersendevorrichtung (38) die Steuerausgabe von dem Betätigungshebel (20a, 20b, 50) empfängt und die Steuerausgabe überträgt,
**dadurch gekennzeichnet, dass**
der Betätigungshebel (20a, 20b, 50) zumindest teilweise mit einem Verbundmaterial versehen ist, wobei der Betätigungshebel (20a, 20b, 50) einen Kern (180) aus einem ersten Materialbestandteil und eine Haut (190) aus einem zweiten und einem dritten Materialbestandteil umfasst, wobei die Haut (190) den Kern (180) umgreift,
und dass die Haut (190) ferner umfasst:
eine erste Schale (192), die eine erste Seite des Kerns (180) bedeckt;
eine zweite Schale (193), die eine zweite Seite des Kerns (180) bedeckt, wobei die erste und die zweite Schale (192, 193) ein Rohr bilden und an zwei Seiten überlappen;
eine erste Versteifung (196), die an einer ersten der beiden Seiten angebracht ist; und
eine zweite Versteifung (197), die an einer zweiten der beiden Seiten angebracht ist, die sich von der ersten der beiden Seiten unterscheidet.

2. Steuersystem (10) nach Anspruch 1, bei dem der erste Materialbestandteil mindestens eines von einem Polyurethanschaum, einem Polyvinylchloridschaum, einem Polyethylenschaum, einem Polystyrolschaum, einem syntaktischen Schaum, einem Metallschaum, einem Graphenschaum, einer Wabe oder einem Holz umfasst.

3. Steuersystem (10) nach einem der Ansprüche 1 oder 2, bei dem der zweite Materialbestandteil ferner umfasst:
eine Verstärkungsphase, die mindestens eines von Glasfasern, Kohlenstofffasern, Aramidfasern, Basaltfasern, Siliziumkarbidfasern, Zellulose, Textilien, Keramikfasern oder Kohlenstoffnanoröhren umfasst.

4. Steuersystem (10) nach einem der vorhergehenden Ansprüche, bei dem der dritte Materialbestandteil ferner umfasst:
ein Matrixmaterial, das mindestens eines von einem Harz, einem Polymer oder einer Keramik umfasst.

5. Steuersystem (10) nach Anspruch 1, bei dem die erste und die zweite Schale (192, 193) jeweils ferner umfassen:
ein erstes Loch (194) am ersten Ende (150) des Betätigungshebels (20a, 20b, 50) zum Aufnehmen der Steuerempfangsvorrichtung (34); und
ein zweites Loch (195) am Drehmittelpunkt (170) des Betätigungshebels (20a, 20b, 50) zum Aufnehmen des Drehlagers (30a).

6. Steuersystem (10) nach Anspruch 5, bei dem das zweite Loch (195) im Drehmittelpunkt (170) mit einer Laminatlagerverstärkung versehen ist.

7. Steuersystem (10) nach Anspruch 5, bei dem die erste und die zweite Schale (192, 193) jeweils Fasern mit einer Ausrichtung von mindestens etwa 45 Grad relativ zu einer Achse (160) durch das erste und zweite Ende (150, 155) umfassen.

8. Steuersystem (10) nach Anspruch 1, bei dem die erste und die zweite Versteifung (196, 197) jeweils ferner unidirektionale Fasern umfassen.

9. Steuersystem (10) nach einem der vorhergehenden Ansprüche, bei dem die Haut (190) ferner umfasst:
eine erste U-förmige Abdeckung (198), die den Kern (180) an dem ersten Ende (150) des Betätigungshebels (20a, 20b, 50) umschließt, um das erste Ende abzudecken; und
eine zweite U-förmige Abdeckung (199), die den Kern (180) an dem zweiten Ende (155) des Betätigungshebels (20a, 20b, 50) umschließt, um das zweite Ende abzudecken.

10. Steuersystem (10) nach Anspruch 9, bei dem die erste und die zweite U-förmige Abdeckung (198, 199) jeweils eine Laminatverstärkung mit einem quasi-isotropen Schichtaufbau umfassen.

11. Steuersystem (10) nach einem der vorhergehenden Ansprüche, bei dem der Betätigungshebel (20a, 20b, 50) ausgewählt ist aus der Gruppe bestehend aus einem geraden Steuerhebel (200), einem gabelförmigen Steuerhebel (300) und einem Umlenkhebel (400).

12. Verfahren (500) zur Herstellung des Betätigungshebels (20a, 20b, 50) des Steuersystems (10) nach Anspruch 9, umfassend:
Aufnehmen (510) einer Mehrzahl von Verbundteilen, die den Kern (180), Vorformlinge der ersten und der zweiten Schale (192, 193), Vorformlinge der ersten und der zweiten Versteifung (196, 197) und Vorformlinge der ersten und der zweiten U-förmigen Abdeckung (198, 199) umfassen, wobei die Vorformlinge der ersten und der zweiten Schale (192, 193), die Vorformlinge der ersten und der zweiten Versteifung (196, 197) und die Vorformlinge der ersten und der zweiten U-förmigen Abdeckung (198, 199) eine Haut (190) bilden, die den Kern (180) umgreift;
Zusammenfügen (520) der Mehrzahl von Verbundteilen, um einen zusammengefügten Betätigungshebel zu erzeugen, indem die Vorformlinge der ersten und der zweiten Schale (192, 193) auf einer ersten bzw. zweiten Seite des Kerns (180) angeordnet werden, so dass die Vorformlinge der ersten und der zweiten Schale (192, 193) einen ersten und einen zweiten Überlappungsbereich bilden, indem die Vorformlinge der ersten und der zweiten U-förmigen Abdeckung (198, 199) auf dem Kern (180) so angeordnet werden, dass die Vorformlinge der ersten und der zweiten U-förmigen Abdeckung (198, 199) das erste und zweite Ende (150, 155) des Betätigungshebels (20a, 20b, 50) umschließen und abdecken, und indem die Vorformlinge der ersten und der zweiten Versteifung (196, 197) am ersten und zweiten Überlappungsbereich der Vorformlinge der ersten und der zweiten Schale (192, 193) angeordnet werden; und
Aushärten (530) des zusammengefügten Betätigungshebels in einer geschlossenen Form (450), um den Betätigungshebel (20a, 20b, 50) herzustellen.

13. Verfahren nach Anspruch 12, bei dem das Aushärten des zusammengefügten Betätigungshebels ferner umfasst:
Platzieren (540) des zusammengefügten Betätigungshebels in der geschlossenen Form (450), wobei die geschlossene Form (450) eine segmentierte Form (450) ist; und
Aufbringen (550) einer Last (460) in einer Richtung auf die segmentierte Form (450), um einen Setzweg (470) in zwei Richtungen bereitzustellen..

## Revendications

1. Système de commande (10) pour un giravion (1), qui reçoit une entrée de commande et transmet une sortie de commande en réponse à réception de l'entrée de commande, comprenant :
un palier de guidage en rotation (30a) ;
un levier d'actionnement (20a, 20b, 50) qui comprend un centre de pivotement (170), une première extrémité (150), et une seconde extrémité (155), dans lequel le centre de pivotement (170) est monté à pivotement sur le palier de guidage en rotation (30a), et dans lequel le levier d'actionnement (20a, 20b, 50) transforme l'entrée de commande en sortie de commande en effectuant un mouvement de rotation autour du centre de pivotement (170) ;
un dispositif de réception de commande (34) qui est couplé à la première extrémité (150) du levier d'actionnement (20a, 20b, 50), dans lequel le dispositif de réception de commande (34) reçoit l'entrée de commande et transmet l'entrée de commande au levier d'actionnement (20a, 20b, 50) ; et
un dispositif de transmission de commande (38) qui est couplé à la seconde extrémité (155) du levier d'actionnement (20a, 20b, 50), dans lequel le dispositif de transmission de commande (38) reçoit la sortie de commande du levier d'actionnement (20a, 20b, 50) et transmet la sortie de commande, **caractérisé en ce que**
le levier d'actionnement (20a, 20b, 50) est au moins partiellement fait de matériau composite, dans lequel le levier d'actionnement (20a, 20b, 50) comprend un noyau (180) comprenant un premier matériau constitutif et une enveloppe (190) comprenant des deuxième et troisième matériaux constitutifs, dans lequel l'enveloppe (190) enveloppe le noyau (180), et **en ce que**
l'enveloppe (190) comprend en outre :
une première coque (192) qui couvre un premier côté du noyau (180) ;
une seconde coque (193) qui couvre un second côté du noyau (180), dans lequel les première et seconde coques (192, 193) forment un tube et se chevauchent sur deux côtés ;
un premier raidisseur (196) fixé à un premier desdits deux côtés ; et
un second raidisseur (197) fixé à un second desdits deux côtés qui est différent du premier desdits deux côtés.

2. Système de commande (10) selon la revendication 1, dans lequel le premier matériau constitutif comprend au moins un matériau choisi parmi une mousse de polyuréthane, une mousse de polychlorure de vinyle, une mousse de polyéthylène, une mousse de polystyrène, une mousse syntactique, une mousse métallique, une mousse de graphène, une structure en nid d'abeille ou une essence de bois.

3. Système de commande (10) selon l'une quelconque des revendications 1 ou 2, dans lequel le second matériau constitutif comprend en outre :
une couche de renforcement qui comprend au moins un matériau choisi parmi des fibres de verre, des fibres de carbone, des fibres d'aramide, des fibres de basalte, des fibres de carbure de silicium, de la cellulose, des textiles, des fibres céramiques ou des nanotubes de carbone.

4. Système de commande (10) selon l'une quelconque des revendications précédentes, dans lequel le troisième matériau constitutif comprend en outre :
un matériau formant matrice qui comprend au moins un matériau choisi parmi résine, polymère ou céramique.

5. Système de commande (10) selon la revendication 1, dans lequel chacune des première et seconde coques (192, 193) comprend en outre :
un premier orifice (194) à la première extrémité (150) du levier d'actionnement (20a, 20b, 50) pour accueillir le dispositif de réception de commande (34) ; et
un second orifice (195) au centre de pivotement (170) du levier d'actionnement (20a, 20b, 50) pour accueillir le palier de guidage en rotation (30a).

6. Système de commande (10) selon la revendication 5, dans lequel le second orifice (195) au centre de pivotement (170) est prévu avec un renfort de palier stratifié.

7. Système de commande (10) selon la revendication 5, dans lequel chacune des première et seconde coques (192, 193) comprend en outre des fibres orientées à approximativement au moins 45 degrés par rapport à un axe (160) passant par les première et seconde extrémités (150, 155).

8. Système de commande (10) selon la revendication 1, dans lequel chacun des premier et second raidisseurs (196, 197) comprend en outre des fibres unidirectionnelles.

9. Système de commande (10) selon l'une quelconque des revendications précédentes, dans lequel l'enveloppe (190) comprend en outre :
une premier capot en forme de U (198) qui épouse le noyau (180) au niveau de la première extrémité (150) du levier d'actionnement (20a, 20b, 50) afin de recouvrir la première extrémité ; et
un second capot en forme de U (199) qui épouse le noyau (180) au niveau de la seconde extrémité (155) du levier d'actionnement (20a, 20b, 50) afin de recouvrir la seconds extrémité.

10. Système de commande (10) selon la revendication 9, dans lequel chacun des premier et second capots en forme de U (198, 199) comprend en outre un renfort stratifié avec un agencement quasi-isotrope.

11. Système de commande (10) selon l'une quelconque des revendications précédentes, dans lequel le levier d'actionnement (20a, 20b, 50) est sélectionné parmi un groupe constitué d'un levier de commande droit (200), un levier de commande en forme de fourche (300), et un levier de commande à renvoi (400).

12. Procédé (500) de fabrication du levier d'actionnement (20a, 20b, 50) du système de commande (10) selon la revendication 9, comprenant :
la réception (510) d'une pluralité de pièces composites comprenant le noyau (180), les première et seconde préformes de coques (192, 193), les première et seconde préformes de raidisseurs (196, 197), et les première et seconde préformes de capots en forme de U (198, 199), suivant lequel les première et seconde préformes de coques (192, 193), les première et seconde préformes de raidisseurs (196, 197), et les première et seconde préformes de capots en forme de U (198, 199) forment une enveloppe (190) qui épouse le noyau (180) ;
l'assemblage (520) de la pluralité de pièces composites pour fabriquer un levier d'actionnement assemblé en plaçant les première et seconde préformes de coques (192, 193) sur les premier et second côtés du noyau (180), respectivement, de façon que les première et seconde préformes de coques (192, 193) forment des première et seconde surfaces de chevauchement, en plaçant les première et seconde préformes de capots en forme de U (198, 199) sur le noyau (180) de façon que les première et seconde préformes de capots en forme de U (198, 199) épousent et couvrent les première et seconde extrémités (150, 155) du levier d'actionnement (20a, 20b, 50), et en plaçant les première et seconde préformes de raidisseurs (196, 197) à l'emplacement des première et seconde surfaces de chevauchement des première et seconde préformes de coques (192, 193) ; et
la polymérisation (530) du levier d'actionnement assemblé dans un moule fermé (450) pour fabriquer le levier d'actionnement (20a, 20b, 50).

13. Procédé selon la revendication 12, dans lequel la polymérisation du levier d'actionnement assemblé comprend en outre :
le placement (540) du levier d'actionnement assemblé à l'intérieur du moule fermé (450), dans lequel le moule fermé (450) est un moule segmenté (450) ; et
l'application (550) sur le moule segmenté (450) d'une force (460) suivant une direction afin d'assurer une répartition (470) suivant deux directions.
